Europäisches Patentamt

(19) European Patent Office

Office européen des brevets

(11) Publication number: **0 006 425**
A1

## (12) EUROPEAN PATENT APPLICATION

(21) Application number: 79101183.6

(22) Date of filing: 19.04.79

(51) Int. Cl³ **B 29 H 17/00,** B 60 C 9/18, B 29 H 17/02

(30) Priority: 12.06.78 US 915039
25.01.79 US 6416

(43) Date of publication of application: 09.01.80 Bulletin 80/1

(84) Designated Contracting States: BE CH DE FR GB IT LU NL SE

(71) Applicant: THE FIRESTONE TIRE & RUBBER COMPANY, 1200 Firestone Parkway, Akron, Ohio 44317 (US)

(72) Inventor: Alliger, Glen, 189 Merriman Road, Akron Ohio 44303 (US)

(74) Representative: von Raffay, Vincenz, Dipl.-Ing. et al. Patentanwälte Raffay & Boeters Postfach 4109, D-2000 Hamburg 13 (DE)

(54) Pneumatic tyre and method of manufacturing it.

(57) Pneumatic tire having a cast body of viscoelastic material, a carbon black-reinforced rubber tread (11) and a girdle member (17). The cast body is continuous and extends from one bead area to the other encompassing the entire sidewalls of the tire and a crown portion (14) radially inward of the rubber tread. The girdle member is contiguous with the crown portion of the cast body, is comprised of a layer of circumferential cords, has a Poisson's ratio substantially equal to the Poisson's ratio of the crown portion of the cast body contiguous to it and a modulus greater than the modulus of the crown portion of the cast body contiguous to it. The girdle may be totally embedded in the crown portion of the cast body or it may be located at the junction of the crown portion of the cast body and the rubber tread. An adhesive is provided at the interface of the cast body and the rubber tread to facilitate adhesion.

- 1 -

PNEUMATIC TIRE

## BACKGROUND OF THE INVENTION

Pneumatic tires having cast bodies of plastic materials (polyurethane) and carbon black-reinforced conventional rubber treads are known (U.S. 3,208,500 and 4,006,767). Originally, cast tires had cast·treads, as opposed to conventional rubber treads; however, it is now known that cast tires require conventional rubber treads to have adequate traction and tread wear. It is also known to construct such tires with breakers or inextensible belts in the tread area of the tires (U.S. 3,775,528 and British 1,118,428). Even though such prior constructions maintained dimensional stability and adequate handling during operation, such tires were unacceptable due to inadequate service durability under normal operating ·conditions.

The dimensional stability of a cast body tire has long been known to be a major drawback. This feature manifests itself by growth of the tire; that is, an increase in the overall diameter of the tire and/or the section width of the tire and a decrease in the tread radius of the tire upon inflation and use. Several constructions have been successful to control this growth. However, these constructions all have inadequate service durability and do not result in tires that will realize high mileages.

- 2 -

This invention has overcome this deficiency and has resulted in a tire construction that had adequate dimensional stability and excellent service life as evidenced by indoor wheel tests. The construction of this invention maintains dimensional stability during service; that is, the overall diameter of the tire does not increase significantly and the tread radius of the tire does not significantly change. Tread radius measures the radius of a circle which would contain the configuration of the road-engaging surface as an arc. A lower number indicates a smaller radius and a greater curvature in the circle and its corresponding arc; a rounder road-engaging surface. This is not a desired result; it is desired that the tread radius remain unchanged as it significantly effects wear and traction.

The use of an inextensible belt in a cast body tire to attain dimensional stability has led to additional problems. These additional problems are separations in the tire at the junction of the belt and the cast body which result in a short service life. The reason for this deficiency is that such teachings do not specifically define the specific structure of the components in the belt and haven't realized that the Poisson's ratio of the belt and the cast body contiguous or adjacent the belt must be substantially equal to prevent separation problems.

Absent a definition, such constructions must be assumed to comprise standard inextensible belt constructions. These constructions would consist of two or more layers or plies of parallel cords in which the cords form an angle of between 10 and 50° to the circumferential centerline of the tire with the angles in adjacent plies being in opposite directions.

Such standard constructions would be very stiff and would have a Poisson's ratio much greater than that of the contiguous or adjacent cast body. This difference results in a high degree of stress between the belt and the body at the interface thereof during the operation of the tire which yields a weakness in the tire.

The Applicant has found that a tire construction having a cast body, a conventional rubber tread and a girdle member with a Poisson's ratio substantially equal to the Poisson's ratio of the contiguous or adjacent cast body and an adequate modulus to retain dimensional stability, yields a tire construction having adequate dimensional stability and excellent service life. This girdle member may be located at the junction of the body and the rubber tread or it may be embedded in the cast body radially below the tread. As the materials normally utilized in cast bodies have Poisson's ratios about 0.5 or less, the tire of this invention must have a girdle member with a Poisson's ratio of less than one; otherwise the service problems of the prior tires will occur.

The Applicant has found that this substantial equality exists in belt members having cord angles in the belt in two distant regions but that only one region has adequate modulus to give the dimensional stability to the tire that is required. This one region is at a cord angle of substantially zero degrees (circumferential cords that are substantially parallel to the circumferential centerline of the tire). The girdle member utilized in this invention is preferably a single ply of such circumferential cords. This ply may be formed by a preassembled layer of parallel cords that are placed parallel to the circumferential centerline of the tire or, preferably, by continuously wrapping a single cord in concentric, parallel circles on a core or form with each cord essentially parallel to the circumferential centerline of the tire. Methods for the incorporation of the girdle member is described in the Summary of the Invention.

Although the use of circumferential cords or spiral wound cords as the sole reinforcing component of the belt member has been taught, it has not been commercially exploited. It has long been known that a tire with only circumferential cords in the belt member would have adverse handling and road stability due to the lack of lateral stability in such tires. This would result in an

- 4 -

0006425

unsafe tire which would be difficult to steer and control. The only way circumferential cords are practically employed in the belt area is in combination with other layers in the belt area with cords at the angles identified above for standard belt layers. The Applicant has determined, in the face of this prejudice, that the construction of this invention yields a dimensionally stable tire with excellent service life.

The Applicant has determined that the handling characteristics of the tire of this invention are attained by the cast body member and not by the girdle member. Therefore, the girdle member was designed with only dimensional stability considerations, not handling considerations.

It is now realized that tires with a cast body must have a conventional rubber tread to have adequate road traction. It is also now realized that cast body tires require some type of restricting member in the tread area to have adequate dimensional stability. It is an object of this invention to provide a tire with a cast body and a rubber tread that has adequate dimensional stability and adequate service life. In this invention, due to the appropriate combination of certain material properties (Poisson's ratio and modulus) of the cast body and the girdle member, these results are achieved. This result is accomplished only with circumferential cords in the girdle member.

## SUMMARY OF THE INVENTION

The tire of this invention contains a cast body of viscoelastic material, a carbon black-reinforced, rubber tread, a girdle member radially below the rubber tread, an adhesive at the interface of the rubber tread and the cast body, and annular bead members. Structurally, the girdle member may be located at the junction of the rubber tread and the cast body or it may be completely embedded in the cast body radially below the tread. When it is at the junction of the tread and the body, it may be embedded in a rubber skim compound.

The carbon black-reinforced, rubber tread may be any of the standard tire treads utilized in the industry and known in the art. Such rubber treads comprise natural or synthetic rubber or blends thereof, are reinforced with various types of carbon black, most commonly furnace blacks, and contain other ingredients, such as processing and extender oils, preservatives (antioxidants, antiozonants and waxes) and vulcanizing ingredients (accelerators and sulfur). The exact composition of the rubber tread is not a part of this invention and any standard rubber tread compound commonly used as such may be employed as this part of the invention. Preferably, however, the tread should have a Durometer hardness of between 55 and 65, preferably 60.

The material utilized in the cast body of this tire may be any of the known high modulus viscoelastic materials that have been recommended for use in a cast tire having no cord reinforcing members in the body as long as the material meets the physical limitations set out below. The limitations are critical to attain the proper balance between the composition of the cast body and the girdle member.

Preferably, the viscoelastic material should have a tensile strength at 212°F equal to or greater than 1,800 psi, a crescent tear strength at 212° equal to or greater than 200 psi, a De Mattia flex life at 176° F equal to or greater than 200,000 cycles; and at ambient temperature, a tensile strength equal to or greater than 2,800 psi, an elongation equal to or greater than 400%, a Young's modulus of between 5,000 and 15,000 psi and a Poisson's ratio of about 0.5, or less, preferably between 0.4 and 0.5.

Polyurethane rubbers, particularly of the type disclosed in U.S. Reissue Patent 28,424 and U.S. 4,006,767 are particularly useful as the material in the body of the tire of this invention. This rubber should have a molecular weight of 800 to 5,000 between the electrostatic cross-links and a molecular weight of 5,100 to 40,000 between the covalent cross-links and a Poisson's ratio of 0.48.

It is understood that the viscoelastic properties of the body material should not permit excessive creep which results in dimensional instability. Creep is an increase in elongation of the material as a function of time for a given load. The creep of the material is correlated to the reduction of the stress with time at a constant elongation. A material which has an excessive reduction of the stress with time is found to exhibit unacceptable dimensional stability or growth in service over a period of time.

The polyurethane elastomer as described above will exhibit acceptable creep during the normal service life of the tire. Materials which exhibit creep significantly greater than that of the described material would be expected to have unacceptable growth if used for a cast tire body.

The bead member in the bead area of the tire may be any of the standard bead constructions normally used, and known in the art, for pneumatic tires. Such bead constructions may comprise layer beads or cable beads and may be manufactured from strands of inextensible materials, such as steel, glass or aramid. The structure of the beads and the strength of the beads is dictated by the strength required to retain the tire on the rim.

The carbon black-reinforced rubber skim compound that the girdle member may be embedded in when it is located at the junction of the tread and the body may be any of the known rubber skim compounds that are normally used in the art with the cord material that is utilized in the girdle member. Such compounds normally contain natural rubber or blends of natural rubber with various synthetic rubbers, carbon black or other reinforcing agents, processing or extender oils, preservatives, such as antiozonants, and vulcanizing agents, such as accelerators and sulfur.

The adhesive that is utilized at the interface of the rubber tread and the cast body has a polyurethane base and is specifically designed to provide adhesion between the dissimilar materials; that is, the rubber tread compound and the polyurethane cast body. Adhesives of this type are described in U.S. Patents 3,880,810; 3,880,808; 3,916,072 and 3,925,590.

Poisson's ratio is a long-recognized property of a material. It is the negative ratio of the lateral strain of the member to the axial strain of the member when the member is under load, either by compression or tension, under certain, defined conditions. That is, when the member is under load, it becomes narrower in width as its length is increased. It is expressed as:

$$\text{POISSON'S RATIO} = -\frac{\text{LATERAL STRAIN}}{\text{AXIAL STRAIN}}$$

The relationship of the Poisson's ratios of the girdle member and the contiguous or adjacent cast body is very important. As the tire goes through its footprint (as it engages the road) in each revolution, the girdle and contiguous body are subjected to forces that bring Poisson's ratio into consideration. In the footprint the girdle and contiguous body become narrower and elongate. This constant narrowing and elongating of the girdle and contiguous body can create unequal strains at the junction of these members if the Poisson's ratio of these members are substantially different which result in a weakening of the tire in this area. Such strains are significantly lessened if the ratios are substantially equal. In the tire of this invention, the Poisson's ratios of the materials in the footprint area, the girdle member and the contiguous cast body, must be substantially the same.

This substantial equality of the Poisson's ratios must not detract from the other important properties of the cast tire, for example, the dimensional stability of the tire. As will be explained later in reference to the drawings, this combination is obtained only when the cords in the girdle member are substantially circumferential; that is, parallel to the circumferential centerline of the tire tread or zero degrees.

The girdle member in the tire of this invention is formed of adjacent parallel cords that are essentially parallel to the circumferential centerline of the tire. These adjacent, parallel cords are formed by either a preassembled ply of parallel cords being located in the tire such that the cords are parallel to the circumferential centerline of the tire or, preferably, circumferentially or spirally wrapping a single cord on a core to form the member. With this spiral wrapping construction there is no splice in the cord layer but merely two single cord ends, one at the beginning of the spiral wrap operation and the other at the end. The girdle member is preferably a single ply but two or more plies may be used, if desired.

The material used for the reinforcing cord in the girdle member may be any of the known reinforcing materials used in penumatic tires. Examples of these materials are aramid, polyesters, steel, glass, rayon, polyvinyl alcohol or nylon. The last material is the least acceptable due to its inherent growth characteristics, whereas the relatively inextensible materials (aramid, steel and glass) are the preferred materials due to their inextensible nature.

The girdle member must have sufficient modulus to yield adequate dimensional stability and a Poisson's ratio substantially equal to the contiguous body to yield service life in the tire. Prior belt structures were designed for high modulus. These would have cord angles of the reinforcing cords in the belt plies on the order
of 20-30 degrees to the circumferential tread centerline.
As such, these structures yield Poisson's ratios much in
excess, usually several times, of the adjacent body.
This resulted in a dimensionally stable tire but yielded
service durability problems.

The modulus and Poisson's ratio in the girdle
member can be provided by the proper selection of the
cord material of the cords, the construction of the
cords, the number of the cords per inch or combinations
of these factors. The modulus of the girdle member must
be greater than the modulus of the cast body material.
It is believed that the modulus must be at least 20,000
psi, preferably at least 100,000 psi. The Poisson's
ratio must be less than one and preferably about 0.5 when
polyurethane rubbers are used in the cast body adjacent
to the girdle member.

The presence of this girdle member and the
proper balance of the above properties with the material
in the cast body results in a cast tire that retains its
dimensional stability (tread radius and overall diameter)
on inflation and use while having excellent service life
or durability. This is accomplished by the circumferential
nature of the reinforcing cords in the girdle member and
the material of the body.

In a method of manufacturing the tire of this
invention wherein the girdle member is totally embedded
in the cast body, the tire cord is spiral wrapped onto a
circular core member that has a diameter equal to the
diameter required for the girdle member in the finished
tire. This wrapping may be a single cord that is spiral
wrapped or it may be a ply of parallel cords that is
wrapped around the core. After the cord is wrapped onto
the core, the core is placed into a tire mold. The mold
already contains the conventional rubber tread (which has
been precured by a previous step) located in the tread

0006425

ring area of the mold which has the adhesive applied to its inner surface. The polyurethane body material is then injected into the mold and the body is cast with the material cured at a temperature between room temperature and 130°C for from 5 to 60 minutes depending upon the type of material used.

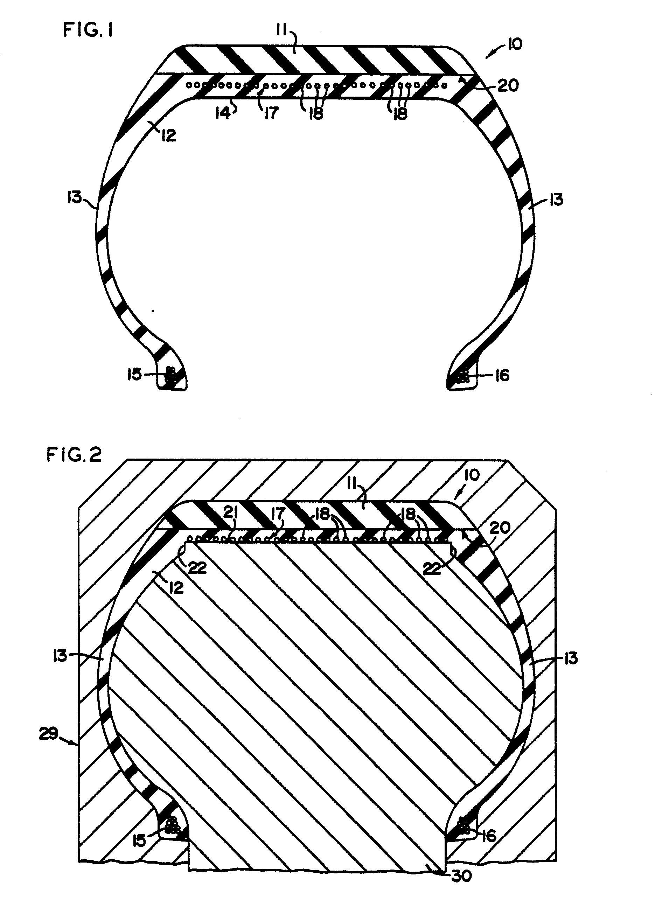

This structure is removed from the mold and during a second casting operation the void that was created by the outer diameter of the core is filled with polyurethane and cured. The resulting tire has the girdle member totally embedded in the polyurethane and at its proper location. This will be explained in greater detail in reference to Figures 1 and 2.

In the method of manufacturing the tire of this invention where the girdle member is located at the junction of the tread and cast body a preassembly of the rubber tread and girdle member is formed. Preferably, this preassembly is formed by applying a layer of uncured rubber skim compound to a mandrel or building drum, spiral wrapping a single cord around the drum to form a layer of parallel, concentric hoops of a continuous cord to form the girdle member at the desired width, applying a second layer of uncured rubber skim compound to the outside of the spiral wrapped girdle member (thereby forming what is known in the art as a ply).

Uncured conventional rubber tread is then applied on top of the girdle member either as a single extruded shape or by spiral wrapping a small ribbon of uncured rubber compound to form the appropriate tread shape. This uncured preassembly is placed in a mold and cured or vulcanized.

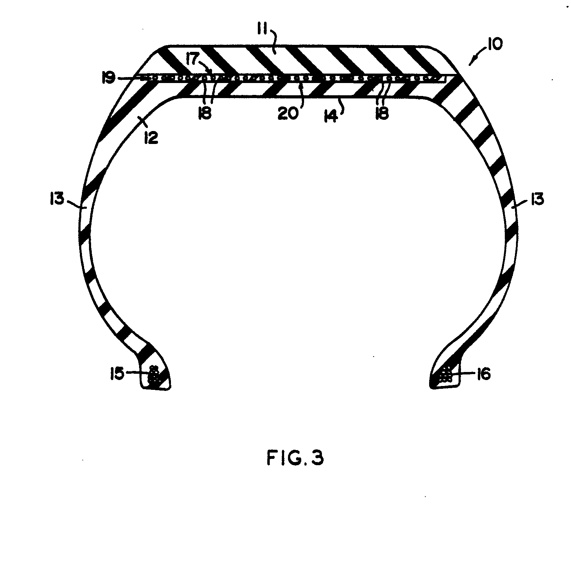

The vulcanized preassembly of tread and girdle member in the form of an annulus is then placed in a casting mold at the appropriate location. The adhesive is then applied to the inner circumference of the tread-girdle member annulus. The annular bead members are placed in the casting mold in the appropriate locations

in the bead area. The body is then cast by any of the known methods. This will be explained in reference to Figure 3.

Such known methods are centrifugal molding wherein the mold is rotated or static liquid injection methods such as reaction injection molding (known in the art as RIM) or liquid injection molding (known in the art as LIM).

DETAILED DESCRIPTION OF THE INVENTION

Figure 1 is a cross-sectional view of the tire of this invention in its molded shape where the girdle member is totally embedded in the cast body radially below the rubber.

Figure 2 is a cross-sectional view of the tire of Figure 1 in a mold after an intermediate assembly step during a method of manufacture.

Figure 3 is a cross-sectional view of the tire of this invention where the girdle member is surrounded by a rubber skim compound and is located at the junction of the tread and cast body.

Figure 4 is a graph depicting the Poisson's ratio of the girdle member and the cast body of this invention and also demonstrates the Poisson's ratio of the prior art belt constructions.

Figure 5 is a graph depicting the modulus of the girdle member of this invention as compared to the modulus of the belt members in the prior art.

Figure 1 shows the tire generally as 10 with a ground-engaging tread, 11, body 12 and annular beads, 15 and 16. The body, 12, extends continuously from bead 15 to bead 16 encompassing sidewalls, 13, and connection crown portion, 14, which is located in the crown area of the tire radially beneath tread, 11.

In this embodiment, the girdle member 17, comprised of reinforcing cords, 18, is embedded in the connecting crown portion, 14, of the body, 12. The tire of this invention is provided with an adhesive at the interface, 20, between the rubber tread, 11, and the crown portion, 14, of the body.

In Figure 2 the structural parts of the tire are identified by the same references as in Figure 1. Figure 2 depicts the tire of this invention in cross-sectional view in a mold, 29, after an intermediate assembly step. In this method, the core, 30, has a diameter, 21, that is a flat surface which corresponds to the diameter of the girdle member for the tire. In this method of manufacture, the girdle member, 17, is placed on the flat portion of the core, 21, by applying a preassembled layer of parallel cords or by spiral wrapping a single cord around the outer periphery, 21, of the core. The precured rubber tread, 11, is placed in the tread retaining ring of the mold, 19, and the adhesive is applied to its inner periphery. The core with girdle member already mounted upon it is then placed in the mold. The polyurethane material is then injected into the mold and a casting takes place in which the material is cured. This casting and cure is accomplished at a temperature between room temperature and 130°C for a time from 5 to 60 minutes depending upon the composition of the polyurethane material used.

After this casting, the cords, 18, in the girdle member, 17, are surrounded by the polyurethane material with the exception of the radially inner surface thereof. The core is then removed from the mold. A second casting and curing step is then undertaken where a sufficient amount of the polyurethane material to fill the cavity defined by surfaces 21 and 22 is placed in the cavity. This results in a tire having the cross-sectional relationships as shown in Figure 1.

In the embodiment shown in Figure 3, the tire is shown generally as 10 with a ground-engaging tread, 11, body 12 and annular beads, 15 and 16. The body, 12, extends continuously from bead 15 to bead 16 encompassing sidewalls, 13, and connection crown portion, 14, which is located in the crown area of the tire radially beneath tread, 11.

This embodiment contains girdle member, 17, which comprises rubber skim compound, 19, and reinforcing cord, 18. This girdle member is located at the junction between the tread 11, and the connecting crown portion, 14, of the body. The tire of this invention is provided with an adhesive at the interface, 20, between the rubber skim, 23, and the crown portion, 14.

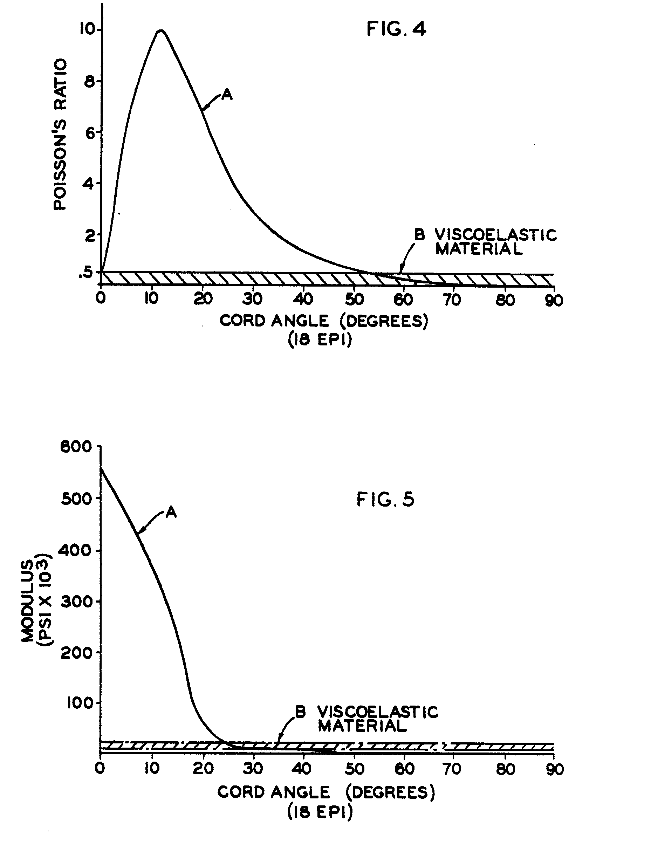

In Figures 4 and 5, the data represents belt members of aramid fibers having a 1500/3 construction, a tensile strength of 165 pounds minimum and an ultimate elongation of 5 to 7%. The angles were formed by two plies with cords at equal and opposite angles, each ply having 18 ends per inch.

In Figure 4 curve A shows the Poisson's ratio plotted against the cord angle of the reinforcing cords in the belt member and curve B (shaded area) shows the Poisson's ratio of the material in the body adjacent the girdle member (crown portion, 14).

The cord angle is defined with zero degrees being circumferential cords, parallel to the circumferential tread centerline, and 90 degrees being radial. The standard cord angles of prior inextensible belts are in the range of 20-35 degrees. This curve clearly shows that such belts have Poisson's ratios many times that of the body and all much greater than one.

Curve B depicts a shaded area which shows the region of the Poisson's ratio of the material used in the cast body adjacent the belt member. The shaded region is 0.50 and below. The Poisson's ratio of the cast material must be within this region. It is not affected by the cord angle. It is included on this Figure to demonstrate the regions where the Poisson's ratio of the girdle member and the cast body are substnatially equal or are equal.

It is clear that the Poisson's ratio of the belt is substantially equal to that of the adjacent cast body at two cord angle regions, zero degrees and 50 degrees and higher. Therefore, this feature of this invention is satisfied at these two regions. Figure 5 shows the reason the 50 degree and higher cord angle regions are not part of this invention.

In Figure 5, the curve A shows the modulus of the belt member as, again, a function of the cord angle of the material in the belt and curve B (shaded area) shows the modulus region of the material in the body adjacent the belt member. Curve A demonstrates that the modulus of the belt increases as the cord angle approaches zero degrees, or circumferential.

The modulus of the material in the cast body adjacent to the girdle member must be in the region of 5,000 to 15,000 psi. Curve B is shaded to depict the area on the Figure. This curve is not affected by the cord angle of the belt member.

In the tire of this invention the modulus of the girdle member must be substantially greater than that of the contiguous or adjacent cast body. It is believed the girdle member modulus must be over 20,000 psi and preferably over 100,000 psi. The comparison of curves A and B in Figure 5 shows the zero cord angle region meets this and the 50 degrees and higher does not. Also, the modulus at the 50 degree and higher cord angles is too low to yield a dimensionally stable tire. This is due to the more radial direction of the cord at these angles.

Figures 4 and 5 demonstrate why the tire of this invention is the only proper combination of the most important properties of a cast tire of this type; that is, the substantial equality of the Poisson's ratio c
the girdle member and the contiguous or adjacent cast
body (crown portion) and a sufficient modulus in the
girdle member to attain dimensional stability in the
tire.

The relationships defined above and in Figures
4 and 5 relate to the cast tire body adjacent the girdle
member, region 14; in Figure 1 which is the region in
which the girdle member is embedded or, as in Figure 3,
the area radially inward of the girdle member. It is
understood that the remainder of the cast body, the
sidewall areas or the bead areas, may be comprised of
material identical to the adjacent body area, 14, or may
be comprised of a material with different physical properties
that is designed for the specific needs of these areas of
the tire; that is, a more flexible material in the sidewall
areas or stiffer material in the bead areas.

Both embodiments of the tire of this invention
have been successfully manufactured in an A78-13 size and
has been successfully tested as demonstrated below.

The specific composition of the rubber tread,
11, was basically a solution styrene/butadiene copolymer
with the standard compounding ingredients, such as reinforcing
carbon black, sulfur, accelerators and the like, as is
well known in the art. The physical properties of the
rubber tread in this specific tire were a tensile strength
of about 2500 psi, a Shore A durometer hardness of about
59, a modulus of about 950 psi at 300% elongation, an
elongation at break of about 600% and a hysteresis value
of 40% as measured on a ball rebound test at room temperature.

The entire tire body, 12, was comprised of a
polyurethane polymer. At 212°F its tensile strength was
2560 psi and its crescent tear strength was 345 psi. At
ambient temperature its tensile strength was 4900 psi,
its elongation was 550% at break and its Young's modulus
was 9,600 psi. Its Poisson's ratio was 0.48.

The adhesive at the interface, 20, was a composition
containing an aliphatic or aromatic nitro compound. It was specifically designed to promote adhesion between a polyurethane member and a rubber member. The particular adhesives employed were similar to one described in U.S. Patents 3,880,810; 3,880,808; 3,916,072 and 3,925,590.

The girdle member, 17, comprised an aramid cord, 18, as the reinforcing cord. The girdle member was obtained by spiral wrapping a continuous cord of aramid around a core. The aramid cord in the girdle member had 10 parallel cords per inch (ends per inch), all parallel to the circumferential centerline of the tire tread. In the embodiment of Figure 1, the girdle member had a width of 3 inches; in the embodiment of Figure 3, it was 4 inches. The aramid fiber used had a 1500/3 construction and a tensile strength of 165 pounds minimum and an ultimate elongation of 5 to 7%. The girdle member had a Poisson's ratio of 0.50 and a modulus of 155,000 psi.

The bead members, 15 and 16, comprised a cable bead construction as is well known in the art. This particular construction comprised a cable of one strand wrapped by eight.

In the embodiment where the girdle member is embedded in a rubber skim compound, the carbon black-reinforced, rubber skim compound, 18, comprised a mixture of natural and synthetic rubbers along with standard compounding ingredients as is well known in the art. The compound was specifically designed to facilitate adhesion with the aramid fiber that was used as the reinforcing cord in the girdle member.

In the embodiment of Figures 1 and 2 wherein the girdle member is entirely embedded in the cast body, after being inflated on a standard 13 inch diameter rim with a 4.5 inch rim width for a period of 24 hours psi, the tire had a circumference of 73.44 inches, a section width of 6.7 inches and a tread radius of 13 inches. The tire so described was tested on a 67-inch diameter indoor test wheel under standard conditions of load and inflation at 50 miles an hour on two endurance type tests as described later.  The tire was removed at the end of the Department
of Transportation Endurance test after 1700 miles with no
failure and after 15,000 miles on the other endurance
test with no failure.  Table I sets out the tire measurements
taken on the tires during these tests with zero miles and
hours being the initial measurement before the test was
started.  These figures indicate very little growth
during service and are well within the Tire & Rim Association
specifications for tire growth.

0006425

## TABLE I

Endurance Test

| Mileage | 0 | 1000 | 15,000 |
|---|---|---|---|
| Radius | 14.5 | 14.5 | 19.5 |
| Circumference on S side | 72.82 | 73.30 | 73.20 |
| Circumference in center | 73.27 | 73.75 | 73.77 |
| Circumference on opp. S side | 72.89 | 73.24 | 73.05 |
| Section width | 6.65 | - | 6.91 |

Department of Transportation Endurance Test

| Hours | 0 | 4 hours | 34 hours |
|---|---|---|---|
| Circumference in center | 73.44 | 73.84 | 74.06 |
| Radius | 13 | 16.5 | 16.0 |
| Section Width | 6.7 | 6.75 | 6.84 |

The tire of this invention as just described (embodiment in Figures 1 and 2) was compared with similar tires having an inextensible stabilizer belt of two layers of reinforcing cords of either glass, rayon or polyester material wherein the cords formed an angle of between 10 and 40 degrees to the circumferential centerline of the tire. These tires represented the prior art stabilizer belt type tires with high Poisson's ratios of at least two units. Three tests were run comparing the tire of this invention and several control tires with the above-ident:fied bias ply stabilizer belts. All tests were run on a 67-inch diameter indoor test wheel.

The first test was the U.S. Department of Transportation (DOT) High Speed Test as defined in Federal Motor Vehicle Safety Standard 109. Under the conditions of this test the tires are run at a constant load (100% of rated load) and a constant inflation pressure (30 psi). The speed of this test is variable comprising a break-in period of 2 hours at 50 miles an hour and then 1/2 hour at 5 mile increments beginning at 75 miles an hour. As Table II indicates the tire of this invention completed the 120 mile step and was removed due to a tread chunk out, a reason not related to the durability of the girdle member. The tires of the prior art with the stabilizer belts failed in the 80 or 85 mile an hour step.

The second test was the U.S. Department of Transportation (DOT) Endurance Test as defined in Federal Motor Vehicle Safety Standard 109. Under the conditions of this test the tires were run at a constant speed, 50 mph, at rated inflation, 24 psi. The load was increased during the test cycle. In the first four hours it was 100% of rated load for the tire, the next six hours it was 108% and the last 24 hours it was 115%. The test was completed after these cycles with the tire running a total of 1,700 miles. The tire of this invention completed the test with no failure; tires of the prior art with stabilizer belts failed between 50 and 1,000 miles.

The third test was another endurance type test. In this test the load, inflation pressure and speed (50 miles per hour) are constant. The load and inflation presure are standard, rated values for the size tire. As the table demonstrates, the tire of this invention completed the test and was removed after 15,000 miles with no failure. The prior art tires were removed at mileages from 50 to 1,000 miles due to failures.

Finally, the table also demonstrates the handling stability of the tire of this invention. This is demonstrated by the cornering force. The tire of this invention demonstrates acceptable handling stability as compared to the prior art tires.

## TABLE II

| Test | Tire Girdle Member | Tire Stabilizer Belts |
|------|--------------------|-----------------------|
| High Speed (DOT) | 120 mph | 80-85 mph |
| Endurance | 15,000 miles (RNF) | 50-1,000 miles |
| Endurance (DOT) | 1,700 (RNF) | 50-1,000 miles |
| Cornering force | Acceptable | Acceptable |

In its molded state (its molded dimensions) the tire of this invention as described in the embodiment shown in Figure 3 (girdle member embedded in a rubber skim compound and located at the junction of the tread and cast body had a circumference of 73.72 inches, a section width of 6.75 inches and a tread radius of infinity (flat). After being inflated on a standard 13 inch diameter rim with a 4.5 inch rim width for a period of 24 hours at 24 psi, this tire had a circumference of 74.18 inches, a section width of 6.72 inches and a tread radius of 10 inches. These dimensional changes are insignificant and demonstrate the dimensional stability of the tire of this invention.

This dimensional stability feature is further evidenced by the dimensions of the tire after testing. The tire so described was tested on a 67-inch diameter indoor test wheel under standard conditions of load and inflation at 50 miles an hour. The tire was removed at the end of the test (3,000 miles) with no failure. On removal, the circumference of the tire was 74.49 inches, the section width was 7.0 inches and the tread radius was 10 or 11 inches as measured. These figures indicate very little growth during service and are well within the Tire & Rim Association specifications for tire growth.

As with the other embodiment of this invention, this embodiment was compared with similar tires having an inextensible stabilizer belt of two layers of reinforcing cords of either glass, rayon or polyester material wherein the cords formed an angle of between 10 and 40 degrees to the circumferential centerline of the tire (as described above) in the three tests described above. All tests were run on a 67-inch diameter indoor test wheel.

The first test was the U.S. Department of Transportation High Speed Test as defined in Federal Motor Vehicle Safety Standard 109. The test conditions for this test are set out earlier. This embodiment of this invention completed the 125 mile step in the DOT High Speed test and was removed due to a tread chunk out, a reason not related to the durability of the girdle member; the tires of the prior art with the stabilizer belts failed in the 80 or 85 mile an hour step (see Table III).

In the DOT Endurance Test (conditions as defined earlier), this embodiment of the tire of this invention completed the test with no failure (1700 miles); tires of the prior art with stabilizer belts failed between 50 and 1,000 miles (see Table III).

In the third test (another endurance type test) as described above, this embodiment of the tire of this invention completed the test and was removed after 3,000 miles with no failure. The prior art tires were removed at mileages from 50 to 1,000 miles due to failures (see Table III).

Table III also demonstrates the handling stability of this embodiment of the tire of this invention. This is demonstrated by the cornering force. This embodiment of the tire of this invention demonstrates acceptable handling stability as compared to the prior art tires.

TABLE III

| Test | Tire<br>Girdle Member | Tire<br>Stabilizer Belts |
|------|------------------------|--------------------------|
| High Speed (DOT) | 125 MPH | 80-85 MPH |
| Endurance (3000 miles) | 3000 Miles (RNF) | 50-1000 Miles |
| Endurance (DOT) | 1700 (RNF) | 50-1000 Miles |
| Cornering Force | Acceptable | Acceptable |

The tire of this invention attains its dimensional stability from the girdle member, its handling characteristics from the material in its cast body and its durability from the proper combination of certain, essential properties (Poisson's ratio and modulus) of the girdle member and the portion of the cast body adjacent thereto. The data set out in Table I, II and III and the dimensional stability (growth) data previously disclosed (molded, 24 hours inflation and post test) demonstrate the results of the construction of this invention and the advance realized thereby.

Claims:

1.    A pneumatic tire comprising an annular road-engaging tread, sidewall connecting the lateral edges of said tread to annular bead areas, a cast body extending continuously from one said bead area to the other encompassing the sidewalls and the crown area radially inward of said tread, a girdle member contiguous to said crown area of said cast body, and an adhesive layer located at the interface between said crown area of said cast body and said tread, said tread comprised of a carbon black-reinforced rubber compound, said body and bead areas comprised of a viscoelastic material having a Young's modulus of between 5,000 and 15,000 psi, said bead areas containing an annular, inextensible, bead member, said girdle member comprising a layer of parallel, substantially circumferentially oriented, reinforcing cords, said girdle member and said crown area of said body having substantially equal Poisson's ratios and said girdle member having a modulus higher than the modulus of said crown area of said body.

2.    The tire of claim 1 wherein said girdle member is totally embedded in said crown area of said cast body.

3.    The tire of claim 1 wherein said girdle member is located at the junction between said tread and said crown area of said cast body.

- 24 -

4. The tire according to one or more of the preceeding claims, wherein said girdle member is embedded in a carbon black-reinforced rubber skim compound and wherein said viscoelastic material is polyurethane.

5. The tire of claim 1 wherein said Poisson's ratios of said viscoelastic material are less than one, particularly less than 0.50 and preferably between 0.40 and 0.50.

6. The tire of claim 1 wherein said girdle member has a modulus greater than 20,000 psi, particularly greater than 100,000 psi, and preferably greater than 150,000 psi with the girdle member comprising a single, continuous, spiral wound cord.

7. The tire of claim 1 wherein said girdle member has a Poisson's ratio of 0.50 and a modulus of at least 100,000 psi and said crown area of said body is a polyurethane rubber having a Poisson's ratio between 0.40 and 0.50.

8. The tire of claim 1 wherein said crown portion of said cast body is comprised of a different viscoelastic material than the remainder of the cast body.

9. In the method of manufacturing a pneumatic tire comprising and annular road-engaging carbon black-reinforced rubber tread, sidewalls connecting the lateral edges of said tread to annular beads, a cast body extending
continuously from one bead to the other encompassing the
sidewalls and the crown area radially inward of said
tread, a girdle member embedded in said crown area of
said cast body and an adhesive layer located at the
interface between said crown area of said cast body and
said tread, the improvement comprising the steps of
placing the girdle member on the outer periphery of an
annular core wherein said outer periphery has a circumference
equal to the circumference of the girdle member in the
finished tire, locating a precured carbon black, reinforced
tread in the tread retaining ring of a tire mold, applying
an adhesive to the inner periphery of said precured
tread, aligning the core member-girdle member assembly in
said mold, injecting a viscoelastic material into said
mold to form the cast body of said tire, curing said
viscoelastic material, removing said core, filling the
cavity radially underneath said girdle member with a
viscoelastic material, and curing said viscoelastic
material in said cavity.

10. In the method of manaufacturing a pneumatic
tire comprising an annular road-engaging carbon black-
reinforced rubber tread, sidewalls connecting the lateral
edges of said tread to annular beads, a cast body extending
continuously from one bead to the other encompassing said
sidewalls and the crown area radially inward of said
tread, a girdle member embedded in a carbon black-reinforced
rubber skim compound located at the junction between said
tread and said crown area of said cast body and an adhesive
layer located at the interface between said crown area of
said cast body and said skim compound, the improvement
comprising the steps of forming a layer of parallel,
concentric hoops of a reinforcing cord with a diameter
equal to the desired diameter of the girdle member in the tire embedded in said rubber skim compound, applying an
uncured, conventional rubber tread strip on the top of
said girdle member to yield a preassembly of said girdle
member and said tread, curing said preassembly in an
appropirate mold to form an annular, precured preassembly
of said girdle member and said tread, placing said cured
preassembly in a tire casting mold at the appropriate
location in the tread ring area, applying an adhesive to
the inner circumference of said preassembly, placing the
annular bead members in the casting mold at the appropriate
locations, injecting the viscoelastic material into said
mold to form said cast body and curing said viscoelastic
material.

$\frac{1}{3}$

FIG.1

FIG.2

FIG.3

0006425

3/3

FIG. 4

FIG. 5

## DOCUMENTS CONSIDERED TO BE RELEVANT

| Category | Citation of document with indication, where appropriate, of relevant passages | Relevant to claim |
|---|---|---|
| X | FR - A - 2 310 892 (O. SCHMIDT)<br>* Page 7, claims 1,2,3 *<br><br>-- | 1,2,6 |
| | FR - A - 2 257 443 (IMPERIAL CHEMICAL INDUSTRIES)<br>* Page 2, line 25 - page 4, line 35; page 7, lines 1-37 *<br><br>-- | 1,6 |
| | US - A - 3 888 291 (H. HERZLICH)<br>* Column 4, line 34 - column 6, line 15 *<br><br>-- | 9 |
| | DE - A - 2 429 449 (PHOENIX)<br>* Page 2, paragraph 2 - page 4, paragraph 3 *<br><br>-- | 9 |
| A | FR - A - 1 298 523 (KLEBER-COLOMBES) | |
| A | FR - A - 2 137 904 (LAITRAM CORP.) | |
| A | US - A - 4 044 811 (T.DUDEK) | |
| PA | US - A - 4 006 767 (J.L. FORD) | |
| A | DE - A - 2 201 747 (DUNLOP)<br><br>---- | |

**CLASSIFICATION OF THE APPLICATION (Int. Cl.?)**

B 29 H 17/00
B 60 C 9/18
B 29 H 17/02

**TECHNICAL FIELDS SEARCHED (Int.Cl.?)**

B 29 H 17/00
        17/02
B 60 C  9/18

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 19-09-1979 | SCHMITT |

EPO Form 1503.1   06.78